(19) **Europäisches Patentamt European Patent Office Office européen des brevets**

(11) **EP 3 921 517 B1**

(12) **FASCICULE DE BREVET EUROPEEN**

(45) Date de publication et mention
de la délivrance du brevet:
**15.10.2025 Bulletin 2025/42**

(21) Numéro de dépôt: **20709277.6**

(22) Date de dépôt: **05.02.2020**

(51) Classification Internationale des Brevets (IPC):
*F01D 21/00* (2006.01)   *F01D 25/04* (2006.01)
*G01H 1/00* (2006.01)   *F01D 17/02* (2006.01)
*G01H 3/00* (2006.01)

(52) Classification Coopérative des Brevets (CPC):
**F01D 25/04; F01D 17/02; F01D 21/003;
G01H 3/005;** F05D 2260/80; F05D 2260/83;
F05D 2260/96; F05D 2270/334; G01H 1/006

(86) Numéro de dépôt international:
**PCT/FR2020/050192**

(87) Numéro de publication internationale:
**WO 2020/161437 (13.08.2020 Gazette 2020/33)**

(54) **SURVEILLANCE DE L'ÉTAT DE SANTÉ D'AU MOINS DEUX CAPTEURS DE VIBRATIONS D'UNE TURBOMACHINE À DOUBLE CORPS**

VERFAHREN ZUR ÜBERWACHUNG DES GESUNDHEITSZUSTANDS VON MINDESTENS ZWEI SCHWINGUNGSSENSOREN EINER DOPPELWELLEN-TURBOMASCHINE

METHOD FOR MONITORING THE STATE OF HEALTH OF AT LEAST TWO VIBRATION SENSORS OF A TWIN-SPOOL TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2019 FR 1901111**

(43) Date de publication de la demande:
**15.12.2021 Bulletin 2021/50**

(73) Titulaire: **SAFRAN AIRCRAFT ENGINES
75015 Paris (FR)**

(72) Inventeur: **ALEKSANDER, Boris
77550 MOISSY-CRAMAYEL (FR)**

(74) Mandataire: **Regimbeau
20, rue de Chazelles
75847 Paris Cedex 17 (FR)**

(56) Documents cités:
**FR-A1- 2 618 899    FR-A1- 2 960 319
FR-A1- 3 064 064**

**Description**

DOMAINE TECHNIQUE GENERAL

L'invention concerne la surveillance de l'état de santé d'une turbomachine à double corps d'un aéronef et plus particulièrement par l'intermédiaire de la surveillance de niveaux vibratoires dans la turbomachine. Et l'invention encore plus particulièrement la surveillance des capteurs de vibrations utilisés à cet effet.

ETAT DE LA TECHNIQUE

L'état de santé d'une turbomachine est classiquement surveillé par toutes sortes de capteurs. Parmi eux, les capteurs de vibrations sont indispensables car ils permettent de détecter rapidement une casse d'une pièce, une augmentation de jeu et toute autre défaillance pouvant mettre en péril la turbomachine.

Une turbomachine à double corps, comprend classiquement, dans le sens de circulation du flux d'air, une soufflante, un compresseur basse pression, un compresseur haute pression, une chambre de combustion, une turbine haute pression et une turbine basse pression.

Une solution connue pour surveiller les vibrations de la turbomachine est de positionner un capteur vibratoire à l'avant de la turbomachine et un autre capteur vibratoire à l'arrière de la turbomachine.

Chacun de ces capteurs, ainsi positionné, permet de faire une surveillance des niveaux vibratoires basse pression et haute pression (c'est-à-dire du corps basse pression et du corps haute pression de la turbomachine) par le biais de filtres pilotés sur les régimes basse pression et haute pression.

Afin de garantir la fiabilité de cette surveillance des niveaux vibratoires, il convient de s'assurer que les capteurs de vibrations fonctionnent correctement pour faire remonter immédiatement des niveaux vibratoires de la turbomachine anormaux.

Pour effectuer cette vérification, il est connu de surveiller l'état de santé des capteurs de vibrations sur un critère de stabilité des niveaux vibratoires détectés pendant les phases de décollage et d'après-vol.

Une telle logique de détection présente toutefois des limites, des fausses pannes des capteurs de vibrations étant déclarées à tort.

- Les phases de surveillance ne sont pas optimales, les niveaux vibratoires dans ces phases sont souvent en deçà des niveaux de détection d'une panne d'un capteur ;
- Lors de fonctionnement à haute température, le régime de la turbomachine étant plus élevé que lors d'un fonctionnement à température nominale, cela peut laisser penser qu'elle se trouve dans une phase de surveillance, les niveaux ne sont alors pas enregistrés au cours de la phase prévue d'autant plus qu'ils peuvent aussi être en deçà des niveaux de détection d'une panne d'un capteur. Les documents FR2618899 A1, FR3 064064A1 et FR2960319 A1 divulguent des procédés de surveillance de l'état de santé de capteurs de vibrations selon l'art antérieur.

PRESENTATION DE L'INVENTION

Au moins un but de l'invention est de définir une logique de détection des pannes des capteurs vibratoires dans le but de s'assurer que seuls les capteurs réellement en panne soient déclarés comme tels.

Pour atteindre ce but, l'invention concerne un procédé de surveillance de l'état de santé d'au moins deux capteurs de vibrations d'une turbomachine à double corps selon la revendication 1 ou la revendication 2.

L'invention est avantageusement complétée par les caractéristiques suivantes, prises seules ou en une quelconque de leur combinaison techniquement possible.

La moyenne déterminée est une moyenne des valeurs des niveaux vibratoires des corps basse et haute pression reçues déterminée pour un nombre de valeurs reçues qui correspond à la durée de réception prédéterminée, la moyenne pouvant être déterminée de manière instantanée au cours de la réception.

Le procédé surveillant deux capteurs deux capteurs, un capteur étant configuré pour mesurer les niveaux de vibrations du corps basse pression et du corps haute pression à l'avant de la turbomachine, l'autre étant configuré pour mesurer les niveaux de vibrations du corps basse pression et du corps haute pression à l'arrière de la turbomachine, l'état de santé d'un capteur étant considéré comme mauvais si les valeurs moyennes des niveaux vibratoires des corps basse pression et haute pression sont inférieures à des seuils prédéterminés ; et si pour l'autre capteur les valeurs moyennes des niveaux vibratoires des corps basse pression et haute pression sont supérieures à des seuils prédéterminés.

Le procédé surveillant quatre capteurs deux capteurs à l'avant de la turbomachine configurés pour mesurer respectivement les niveaux de vibrations des corps basse pression et haute pression à l'avant, deux capteurs à l'arrière de la turbomachine configurés pour mesurer respectivement les niveaux de vibrations des corps basse pression et haute pression à l'arrière, l'état de santé d'un capteur des niveaux vibratoires du corps basse pression étant considéré comme mauvais si la valeur moyenne des niveaux vibratoires est inférieure à un seuil prédéterminé, et si pour l'autre capteur la valeur moyenne des niveaux vibratoires est supérieure à un seuil prédéterminé ; l'état de santé d'un capteur des niveaux vibratoires du corps haute pression étant considéré comme mauvais si la valeur moyenne des niveaux vibratoires est inférieure à un seuil prédéterminé, et si pour l'autre capteur la valeur moyenne des niveaux vibratoires est supérieure à un seuil prédéterminé.

Le procédé comprend une confirmation de l'état de santé bon ou mauvais d'un capteur dès lors que le capteur présente le même état de santé trois fois consécutivement.

A titre d'exemple, un seuil vibratoire prédéterminé pour le corps basse pression est compris entre 0,1 et 0,2 cm/s, typiquement 0,16 cm/s.

A titre d'exemple, un seuil vibratoire prédéterminé pour le corps haute pression est compris entre 0,05 et 0,15 cm/s, typiquement 0,10 cm/s.

La plage prédéterminée pour le régime basse pression est entre 10500 tr/min et 13500 tr/min et dans lequel la plage prédéterminée pour le régime haute pression est entre 14500 tr/min et 17500 tr/min.

L'invention concerne également une turbomachine à double corps comprenant une unité de traitement configurée pour mettre en oeuvre un procédé selon l'invention.

Les avantages de l'invention sont multiples.

La détection des pannes est plus robuste qu'au moyen des solutions connues.

En effet, la détection se fait à des régimes plus élevés (donc plus « vibrant ») et la nécessité de confirmer le calcul des moyennes plusieurs fois permet également de rendre plus robuste la réalité de la panne capteur.

Les fausses pannes sont donc limitées.

Il est possible de réhabiliter un capteur qui a été déclaré en panne.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

    [Fig. 1]

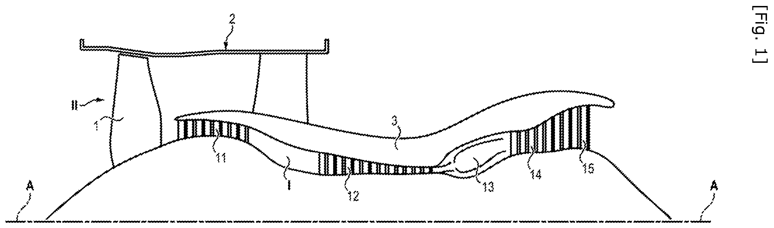

    la figure 1 illustre schématiquement une turbomachine à double corps,
    [Fig. 2]

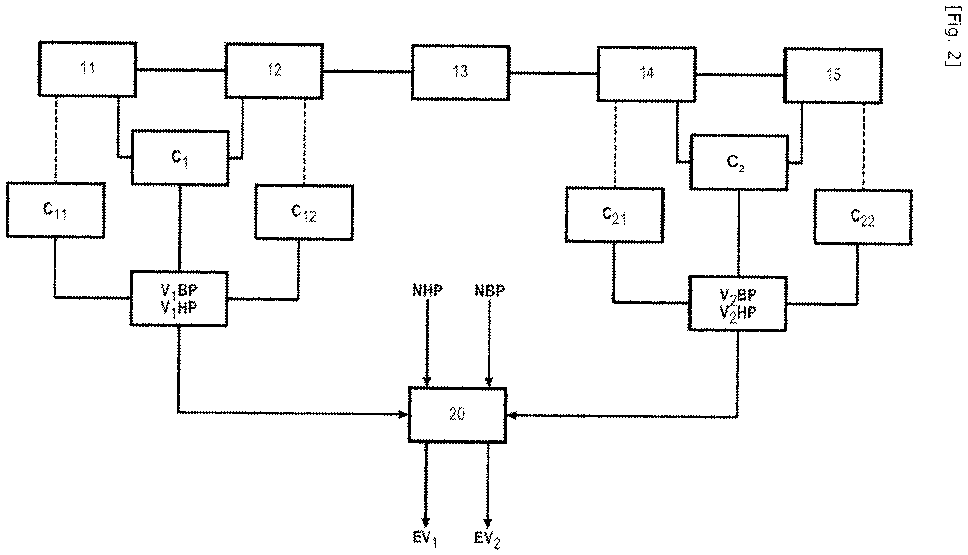

    la figure 2 illustre une architecture pour la mise en oeuvre du procédé selon l'invention ;
    [Fig. 3]

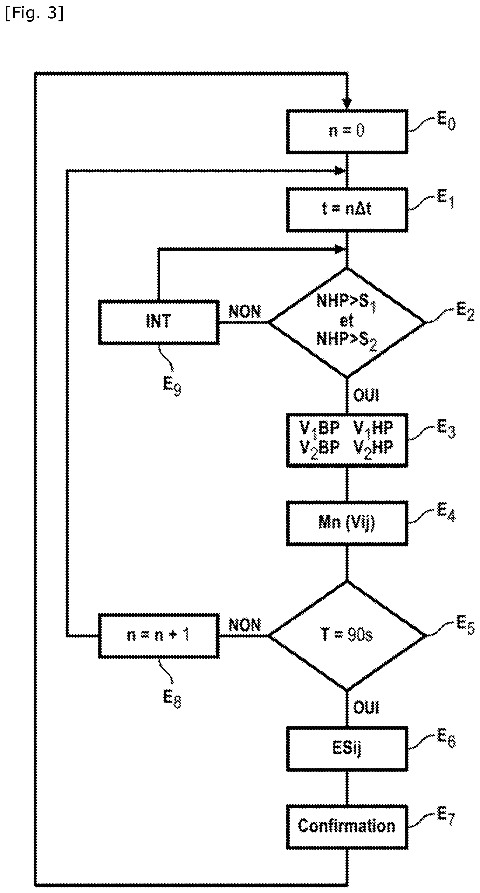

    la figure 3 illustre des étapes d'un procédé selon l'invention.

Sur l'ensemble des figures les éléments similaires portent des références identiques.

DESCRIPTION DETAILLEE DE L'INVENTION

La **figure 1** illustre une turbomachine à double flux et à double corps d'un aéronef comprenant d'amont en aval dans le sens de l'écoulement des gaz (selon l'axe moteur AA), une soufflante carénée 1, un espace annulaire d'écoulement primaire I et un espace annulaire d'écoulement secondaire II (veine secondaire) délimité par un carter externe 2 et un moyeu interne 3. La turbomachine comprend dans la veine primaire I, un compresseur 11 basse pression, un compresseur 12 haute pression, une chambre 13 de combustion, une turbine 14 haute pression et une turbine 15 basse pression.

La turbomachine comprend donc à l'avant et à l'arrière (dans le sens d'écoulement des gaz) un corps basse pression et un corps haute pression.

Comme mentionné, en introduction des capteurs de vibrations sont disposés à l'avant et à l'arrière pour mesurer des vibrations des corps basse pression et haute pression.

Comme illustré, schématiquement sur la **figure 2,** selon un mode de réalisation un capteur C1 permet de mesurer des vibrations V1BP, V1HP des corps basse pression et haute pression à l'avant et un capteur C2 permet de mesurer des vibrations V2BP, V2HP des corps basse pression et haute pression à l'arrière.

Selon ce mode de réalisation, un seul capteur est disposé à l'arrière et un seul capteur est disposé à l'avant, chacun mesurant à la fois les vibrations des corps basse pression et haute pression. Pour ce faire, un filtrage des vibrations reçues doit être effectué pour pouvoir séparer des vibrations issues du corps basse pression de celles issues du corps haute pression.

En variante, on peut prévoir quatre capteurs, deux à l'avant et deux à l'arrière. Dans cette variante un capteur C11 permet de mesurer des vibrations V1BP du corps basse pression à l'avant, un capteur C12 permet de mesurer des vibrations V1HP du corps haute pression à l'avant, un capteur C21 permet de mesurer des vibrations V2BP du corps basse pression à l'arrière un capteur C22 permet de mesurer des vibrations V2HP du corps haute pression à l'arrière.

De tels capteurs de vibrations sont par exemple constitués par des accéléromètres.

Les capteurs peuvent être positionnés à plusieurs endroits de la turbomachine. Par exemple, pour mesurer les vibrations à l'avant du corps basse pression, un capteur peut être disposé au niveau du compresseur basse pression. Pour mesurer les vibrations à l'avant du corps haute pression, un capteur peut être disposé au niveau du compresseur haute pression. Pour mesurer les vibrations à l'arrière du corps haute pression, un capteur peut être disposé au niveau de la turbine haute pression. Pour mesurer les vibrations à l'arrière du corps basse pression, un capteur peut être disposé au niveau de la turbine basse pression.

Comme mentionné en introduction, ces capteurs de vibrations ont besoin d'être surveillés. Une telle surveillance est mise en oeuvre dans une unité 20 de traitement au moyen d'un procédé de surveillance de l'état de santé des capteurs de vibrations décrit ci-après en relation avec la **figure 3.**

La surveillance de l'état de santé des capteurs de vibrations est basée sur l'exploitation de mesures vibratoires issues des capteurs dans des plages de régime basse pression et haute pression pour lesquelles les niveaux vibratoires sont pertinents.

De manière avantageuse, les niveaux vibratoires sont enregistrés, pour la surveillance, pendant des périodes T. Cette période T doit être assez élevée pour avoir une moyenne des mesures de niveaux vibratoires assez élevées (dans le cas d'un capteur intègre) et donc être au-dessus du seuil de détection d'un capteur en panne. En effet, statistiquement, plus le temps de calcul de la moyenne est élevé, plus la moyenne calculée aura un minimum élevé. Cette période T doit également être assez basse pour permettre au système d'être assez longtemps dans les plages de détection afin d'assurer au moins 3 calculs de moyenne au cours d'un vol. Cette période est de préférence comprise entre 60 et 120 s et de préférence est égale à 90s.

Au début du procédé, le pas n de calcul est initialisé à n=0 (étape E0) et la durée t= n.$\Delta$t est calculée (étape E1) avec $\Delta$t la durée d'un enregistrement des niveaux vibratoires.

Après ces différentes initialisations, l'unité de traitement 20 reçoit E2 les régimes basse pression NBP et haute pression NHP et lorsque ces régimes sont simultanément dans des plages prédéterminées, l'unité 20 de traitement reçoit (étape E3) des niveaux vibratoires V1BP, V2BP, V1HP, V2HP issus des capteurs de vibrations à surveiller.

Les plages des régimes basse pression NBP et haute pression NHP sont de préférences les suivantes :

- NBP = [10500 ; 13500] tr/min ;
- NHP = [14500 ; 17500] tr/min.

De tels régimes sont par exemple déterminés par une étude statistique des niveaux vibratoires réellement vus par le moteur à différents régimes. Les régimes de la logique de surveillance sont donc choisis en fonction des valeurs vibratoires par rapport au seuil et/ou le seuil est choisi en fonction de la pertinence des régimes issus de l'étude statistique.

Dans le cas de deux capteurs, un à l'avant, un à l'arrière, chaque capteur C1, C2 acquiert deux niveaux vibratoires :

- Le capteur C1 à l'avant acquiert les niveaux vibratoires basse pression V1BP et haute pression V1HP ;
- Le capteur C2 à l'arrière acquiert les niveaux vibratoires basse pression V2BP et haute pression V2HP.

Dans le cas de quatre capteurs, deux à l'avant, deux à l'arrière, chaque capteur C11, C12, C21, C22 acquiert un niveau vibratoire :

- Le capteur C11 à l'avant acquiert les niveaux vibratoires V1BP du corps basse pression avant ;
- Le capteur C12 à l'avant acquiert les niveaux vibratoires V1HP du corps haute pression ;
- Le capteur C21 à l'arrière acquiert les niveaux vibratoires V2BP du corps basse pression ;

- Le capteur C22 à l'arrière acquiert les niveaux vibratoires V2HP du corps haute pression.

A partir des valeurs reçues, l'unité 20 de traitement calcule (étape E4) la moyenne instantanée de chaque niveau vibratoire de la manière suivante :

$$M_n(Vij) = \frac{M_{n-1}(Vij).(n-1)}{n} + \frac{Vij}{n}$$

avec i={1, 2} et J={BP, HP}.

La moyenne instantanée est calculée à chaque pas n sur la période T et à chaque pas de calcul n est incrémenté de 1 (étape E8). A l'issue de la période T, les moyennes

- M1BP, M1HP des niveaux des corps basse pression et haute pression mesurés par le ou les capteurs avant ;
- M2BP, M2HP des niveaux des corps basse pression et hautes pression mesurés par le ou les capteurs arrière ;

sont obtenues.

De manière alternative, la moyenne peut être calculée une fois que toutes les valeurs des niveaux vibratoires sont acquises pendant une durée totale T. Cela signifie que les valeurs sont stockées au fur et à mesure.

De manière complémentaire, afin de s'assurer que les régimes basse et haute pression sont bien simultanément dans les plages prédéterminées, l'unité 20 de traitement vérifie (étape E2) avant chaque réception des niveaux vibratoires, les valeurs des régimes basse et haute pression. Si ce n'est pas le cas, l'unité 20 de traitement interrompt (INT) (étape E9) la réception des niveaux vibratoires pour le calcul de la moyenne. En revanche, dès que les régimes reviennent dans les plages prédéterminées, l'unité 20 de traitement reprend où elle s'était arrêtée.

Lorsqu'un nombre de niveaux vibratoires moyenné correspond à une période T=90s (étape E5) l'unité 20 de traitement détermine (étape E6) l'état de santé de chaque capteur.

L'état de santé d'un capteur est obtenu à partir d'une comparaison de chaque moyenne M1BP, M1HP, M2BP, M2H à un seuil vibratoire.

Le seuil basse pression SBP est typiquement compris entre 0,1 et 0,2 cm/s de préférence 0,16 cm/s

Le seuil haute pression SHP est typiquement compris entre 0,05 et 0,15 cm/s, de préférence 0,10 cm/s.

Là encore ces différents seuils sont issus d'une étude statistique.

Dans le cas de deux capteurs, l'état de santé ESij d'un capteur est considéré comme mauvais si les valeurs moyennes des niveaux vibratoires des corps basse pression et haute pression sont inférieures aux seuils SBP, SHP respectivement ; et si pour l'autre capteur les valeurs moyennes des niveaux vibratoires des corps basse pression et haute pression sont supérieures aux seuils SBP, SHP respectivement.

De manière alternative, dans le cas de quatre capteurs, l'état de santé ESij d'un capteur des niveaux vibratoires du corps basse pression est considéré comme mauvais si la valeur moyenne des niveaux vibratoires est inférieure au seuil SBP, et si pour l'autre capteur la valeur moyenne des niveaux vibratoires du corps basse pression est supérieure au seuil SBP ; l'état de santé d'un capteur des niveaux vibratoires du corps haute pression est considéré comme mauvais si la valeur moyenne des niveaux vibratoires du corps haute pression est inférieure au seuil SHP, et si pour l'autre capteur la valeur moyenne des niveaux vibratoires du corps haute pression est supérieure au seuil SHP.

A partir de l'état de santé ainsi déterminé, l'unité 20 de traitement procède à une confirmation (étape E7) de l'état de santé de l'état de santé bon ou mauvais d'un capteur dès lors que le capteur présente le même état de santé trois fois consécutivement.

Il est donc possible de réhabiliter un capteur dont l'état de santé aurait été confirmé comme mauvais.

## Revendications

1. Procédé de surveillance de l'état de santé d'au moins deux capteurs de vibrations d'une turbomachine à double corps comprenant un corps basse pression et un corps haute pression, un capteur avant (C1, C1') de vibrations étant situé à l'avant de la turbomachine, un capteur arrière (C2, C2') de vibrations étant situé à l'arrière de la turbomachine, un capteur avant s étant configuré pour mesurer des vibrations des corps basse pression et haute pression à l'avant de la turbomachine, un capteur arrière étant configuré pour mesurer des vibrations des corps basse pression et haute pression à l'arrière de la turbomachine, le procédé étant mis en œuvre dans une unité (20) de traitement de la turbomachine en communication avec chacun des capteurs et comprenant les étapes suivantes :

- réception (E1) des régimes basse pression (NBP) et haute pression (NHP) de la turbomachine ;
au cours de l'étape de réception, une étape de vérification (E2) des régimes basse pression et haute pression ; et lorsque lesdits régimes sont simultanément dans des plages prédéterminées,
- réception (E3) des niveaux vibratoires (v1_BP, v1_HP, v2_BP, v2_HP, v3_HP, v3_BP) avant et arrière des corps basse et haute pression enregistrés par chaque capteur ;
- filtrage des niveaux vibratoires de manière à séparer les niveaux vibratoires issus du corps basse pression de ceux issus du corps haute pression ;
- détermination (E4) de la moyenne des valeurs des niveaux vibratoires des corps basse et haute pression reçues sur une durée de réception prédéterminée ;
- détermination (E6) de l'état de santé desdits au moins premier et deuxième capteurs de vibrations à partir d'une comparaison des valeurs moyennes des niveaux vibratoires des corps basse et haute pression déterminées à des seuils prédéterminés, l'état de santé d'un capteur étant considéré comme mauvais si les valeurs moyennes des niveaux vibratoires des corps basse pression et haute pression sont inférieures à des seuils prédéterminés ; et si pour l'autre capteur les valeurs moyennes des niveaux vibratoires des corps basse pression et haute pression sont supérieures à des seuils prédéterminés ;
- interruption (E9) de la réception des niveaux vibratoires si les régimes ne sont pas simultanément dans les plages prédéterminées.

2. Procédé de surveillance de l'état de santé d'au moins deux capteurs de vibrations d'une turbomachine à double corps comprenant un corps basse pression et un corps haute pression, deux capteurs avant (C11, C12) de vibrations étant situé à l'avant de la turbomachine, deux capteurs arrière (C21, C22) de vibrations étant situé à l'arrière de la turbomachine, deux capteurs à l'avant de la turbomachine étant configurés pour mesurer respectivement les niveaux de vibrations des corps basse pression et haute pression à l'avant, deux capteurs à l'arrière de la turbomachine étant configurés pour mesurer respectivement les niveaux de vibrations des corps basse pression et haute pression à l'arrière, le procédé étant mis en œuvre dans une unité (20) de traitement de la turbomachine en communication avec chacun des capteurs et comprenant les étapes suivantes :

- réception (E1) des régimes basse pression (NBP) et haute pression (NHP) de la turbomachine ;
au cours de l'étape de réception, une étape de vérification (E2) des régimes basse pression et haute pression ; et lorsque lesdits régimes sont simultanément dans des plages prédéterminées,
- réception (E3) des niveaux vibratoires (v1_BP, v1_HP, v2_BP, v2_HP, v3_HP, v3_BP) avant et arrière des corps basse et haute pression enregistrés par chaque capteur ;
- détermination (E4) de la moyenne des valeurs des niveaux vibratoires des corps basse et haute pression reçues sur une durée de réception prédéterminée ;

- détermination (E6) de l'état de santé desdits au moins premier et deuxième capteurs de vibrations à partir d'une comparaison des valeurs moyennes des niveaux vibratoires des corps basse et haute pression déterminées à des seuils prédéterminés, l'état de santé d'un capteur des niveaux vibratoires du corps basse pression étant considéré comme mauvais si la valeur moyenne des niveaux vibratoires est inférieure à un seuil prédéterminé, et si pour l'autre capteur la valeur moyenne des niveaux vibratoires est supérieure à un seuil prédéterminé ; l'état de santé d'un capteur des niveaux vibratoires du corps haute pression étant considéré comme mauvais si la valeur moyenne des niveaux vibratoires est inférieure à un seuil prédéterminé, et si pour l'autre capteur la valeur moyenne des niveaux vibratoires est supérieure à un seuil prédéterminé ;

- interruption (E9) de la réception des niveaux vibratoires si les régimes ne sont pas simultanément dans les plages prédéterminées.

3. Procédé selon l'une des revendications précédentes dans lequel la moyenne déterminée (E4) est une moyenne des valeurs des niveaux vibratoires des corps basse et haute pression reçues déterminée pour un nombre de valeurs reçues qui correspond à la durée de réception prédéterminée, la moyenne pouvant être déterminée de manière instantanée au cours de la réception.

4. Procédé selon l'une des revendications précédentes, comprenant une confirmation (E7) de l'état de santé bon ou mauvais d'un capteur dès lors que le capteur présente le même état de santé trois fois consécutivement.

5. Procédé selon l'une des revendications précédentes, dans lequel un seuil vibratoire prédéterminé pour le corps basse pression est compris entre 0,1 et 0,2 cm/s, typiquement 0,16 cm/s.

6. Procédé selon l'une des revendications précédentes, dans lequel un seuil vibratoire prédéterminé pour le corps haute pression est compris entre 0,05 et 0,15 cm/s, typiquement 0,10 cm/s.

7. Procédé selon l'une des revendications précédentes, dans lequel la plage prédéterminée pour le régime basse pression est entre 10500 tr/min et 13500 tr/min et dans lequel la plage prédéterminée pour le régime haute pression est entre 14500 tr/min et 17500 tr/min.

8. Turbomachine à double corps comprenant un corps basse pression et un corps haute pression, la turbomachine comprenant au moins un capteur avant (C1, C1') de vibrations situé à l'avant de la turbomachine, un capteur arrière (C2, C2') de vibrations situé à l'arrière de la turbomachine, la turbomachine comprenant une unité (20) de traitement configurée pour mettre en œuvre un procédé selon l'une des revendications précédentes.

**Patentansprüche**

1. Verfahren zur Überwachung des Gesundheitszustands von mindestens zwei Schwingungssensoren einer Doppelwellen-Turbomaschine, die einen Niederdruckkörper und einen Hochdruckkörper umfasst, wobei sich ein vorderer Schwingungssensor (C1, C1') vorn an der Turbomaschine befindet, sich ein hinterer Schwingungssensor (C2, C2') hinten an der Turbomaschine befindet, wobei ein vorderer Sensor s ausgelegt ist, um Schwingungen des Niederdruck- und Hochdruckkörpers vorn an der Turbomaschine zu messen, wobei ein hinterer Sensor ausgelegt ist, um Schwingungen des Niederdruck- und Hochdruckkörpers hinten an der Turbomaschine zu messen, wobei das Verfahren in einer Verarbeitungseinheit (20) der Turbomaschine in Kommunikation mit jedem der Sensoren durchgeführt wird und die folgenden Schritte umfasst:

- Empfangen (E1) der Niederdruckdrehzahl (NBP) und der Hochdruckdrehzahl (NHP) der Turbomaschine;
während des Empfangsschritts, einen Überprüfungsschritt (E2) der Niederdruck- und Hochdruckdrehzahl; und wenn sich die Drehzahlen gleichzeitig in vorbestimmten Bereichen befinden,
- Empfangen (E3) der von jedem Sensor aufgezeichneten Schwingungspegel (v1_BP, v1_HP, v2_BP, v2_HP, v3_HP, v3_BP) vor und hinter dem Niederdruck- und Hochdruckkörper;
- Filtern der Schwingungspegel derart, dass die vom Niederdruckkörper und die vom Hochdruckkörper ausgehenden Schwingungspegel getrennt werden;
- Bestimmen (E4) des Mittelwerts der Werte der Schwingungspegel des Niederdruck- und Hochdruckkörpers, die über einen vorbestimmten Empfangszeitraum empfangen wurden;
- Bestimmen (E6) des Gesundheitszustands des mindestens ersten und zweiten Schwingungssensors anhand eines Vergleichs der bestimmten Mittelwerte der Schwingungspegel des Niederdruck- und Hochdruckkörpers mit vorgegebenen Schwellenwerten, wobei der Gesundheitszustand eines Sensors als schlecht angesehen wird, wenn die Mittelwerte der Schwingungspegel des Niederdruck- und Hochdruckkörpers unter vorbestimmten Schwellenwerten liegen; und wenn für den anderen Sensor die Mittelwerte der Schwingungspegel des Niederdruck- und Hochdruckkörpers über vorbestimmten Schwellenwerten liegen;

- Unterbrechen (E9) des Empfangs der Schwingungspegel, wenn die Drehzahlen nicht gleichzeitig in den vorgegebenen Bereichen liegen.

2. Verfahren zur Überwachung des Gesundheitszustands von mindestens zwei Schwingungssensoren einer Doppelwellen-Turbomaschine, die einen Niederdruckkörper und einen Hochdruckkörper umfasst, wobei sich zwei vordere Schwingungssensoren (C11, C12) vorn an der Turbomaschine befinden, sich zwei hintere Schwingungssensoren (C21, C22) hinten an der Turbomaschine befinden, wobei zwei Sensoren vorn an der Turbomaschine ausgelegt sind, um jeweils die Schwingungspegel des Niederdruck- und Hochdruckkörpers vorn zu messen, wobei zwei Sensor hinten an der Turbomaschine ausgelegt sind, um jeweils die Schwingungspegel des Niederdruck- und Hochdruckkörpers hinten zu messen, wobei das Verfahren in einer Verarbeitungseinheit (20) der Turbomaschine in Kommunikation mit jedem der Sensoren durchgeführt wird und die folgenden Schritte umfasst:

- Empfangen (E1) der Niederdruckdrehzahl (NBP) und der Hochdruckdrehzahl (NHP) der Turbomaschine;
während des Empfangsschritts, einen Überprüfungsschritt (E2) der Niederdruck- und Hochdruckdrehzahl; und wenn sich die Drehzahlen gleichzeitig in vorbestimmten Bereichen befinden,
- Empfangen (E3) der von jedem Sensor aufgezeichneten Schwingungspegel (v1_BP, v1_HP, v2_BP, v2_HP, v3_HP, v3_BP) vor und hinter dem Niederdruck- und Hochdruckkörper;
- Bestimmen (E4) des Mittelwerts der Werte der Schwingungspegel des Niederdruck- und Hochdruckkörpers, die über einen vorbestimmten Empfangszeitraum empfangen wurden;
- Bestimmen (E6) des Gesundheitszustands des mindestens ersten und zweiten Schwingungssensors anhand eines Vergleichs der bestimmten Mittelwerte der Schwingungspegel des Niederdruck- und Hochdruckkörpers mit vorgegebenen Schwellenwerten, wobei der Gesundheitszustand eines Sensors der Schwingungspegel des Niederdruckkörpers als schlecht angesehen wird, wenn der Mittelwert der Schwingungspegel unter einem vorbestimmten Schwellenwert liegt; und wenn für den anderen Sensor der Mittelwert der Schwingungspegel über einem vorbestimmten Schwellenwert liegt; wobei der Gesundheitszustand eines Sensors der Schwingungspegel des Hochdruckkörpers als schlecht angesehen wird, wenn der Mittelwert der Schwingungspegel unter einem vorbestimmten Schwellenwert liegt; und wenn für den anderen Sensor der Mittelwert der Schwingungspegel über einem vorbestimmten Schwellenwert liegt

- Unterbrechen (E9) des Empfangs der Schwingungspegel, wenn die Drehzahlen nicht gleichzeitig in den vorgegebenen Bereichen liegen.

3. Verfahren nach einem der vorstehenden Ansprüche, wobei der bestimmte Mittelwert (E4) ein Mittelwert der Werte der empfangenen Schwingungspegel des Niederdruck- und Hochdruckkörpers ist, der für eine Anzahl empfangener Werte bestimmt wird, die der vorbestimmten Empfangsdauer entspricht, wobei der Mittelwert während des Empfangs sofort bestimmt werden kann.

4. Verfahren nach einem der vorstehenden Ansprüche, umfassend eine Bestätigung (E7) des guten oder schlechten Gesundheitszustands eines Sensors, sobald der Sensor dreimal hintereinander denselben Gesundheitszustand aufweist.

5. Verfahren nach einem der vorstehenden Ansprüche, wobei ein vorbestimmter Schwingungsschwellenwert für den Niederdruckkörper zwischen 0,1 und 0,2 cm/s, typischerweise bei 0,16 cm/s, liegt.

6. Verfahren nach einem der vorstehenden Ansprüche, wobei ein vorbestimmter Schwingungsschwellenwert für den Hochdruckkörper zwischen 0,05 und 0,15 cm/s, typischerweise bei 0,10 cm/s, liegt.

7. Verfahren nach einem der vorstehenden Ansprüche, wobei der vorbestimmte Bereich für die Niederdruckdrehzahl zwischen 10500 U/min und 13500 U/min liegt und wobei der vorbestimmte Bereich für die Hochdruckdrehzahl zwischen 14500 U/min und 17500 U/min liegt.

8. Doppelwellen-Turbomaschine, umfassend einen Niederdruckkörper und einen Hochdruckkörper, wobei die Turbomaschine mindestens einen vorderen Schwingungssensor (C1, C1') umfasst, der sich vorn an der Turbomaschine befindet, einen hinteren Schwingungssensor (C2, C2'), der sich hinten an der Turbomaschine befindet, wobei die Turbomaschine eine Verarbeitungseinheit (20) umfasst, die zur Durchführung eines Verfahrens nach einem der vorstehenden Ansprüche ausgelegt ist.

**Claims**

1.  A process for monitoring the state of health of at least two vibration sensors of a bypass turbomachine, comprising a low-pressure body and a high-pressure body, a front vibration sensor (C1, C1') being located at the front of the turbomachine, a rear vibration sensor (C2, C2') being located at the rear of the turbomachine, a front sensor being configured to measure vibrations of the low-pressure and high-pressure bodies at the front of the turbomachine, a rear sensor being configured to measure vibrations of the low-pressure and high-pressure bodies at the rear of the turbomachine, the method being implemented in a turbomachine processing unit (20) in communication with each of the sensors and comprising the following steps:

    - receiving (E1) low-pressure (NBP) and high-pressure (NHP) speeds of the turbomachine;
    during the receiving step, a verification step (E2) of the low-pressure and high-pressure speeds; and when said speeds are simultaneously within predetermined ranges,
    - receiving (E3) the vibration levels (v1_BP, v1_HP, v2_BP, v2_HP, v3_HP, v3_BP) at the front and rear of the low-pressure and high-pressure bodies recorded by each sensor;
    - filtering the vibration levels in order to separate the vibration levels from the low-pressure body from those from the high-pressure body;
    - determining (E4) the average values of the vibration levels of the low-pressure and high-pressure bodies received over a predetermined reception period;
    - determining (E6) the state of health of said at least first and second vibration sensors based on a comparison of the average values of the vibration levels of the low-pressure and high-pressure bodies determined at predetermined thresholds,
    the state of health of a sensor of the vibration levels of the low pressure body being considered poor if the average values of the vibration levels is below predetermined threshold, and if for the other sensor, the average values of the vibration levels is above a predetermined threshold; the state of health of a sensor of the vibration levels of the high pressure body being considered poor if the average values of the vibration levels is below predetermined threshold, and if for the other sensor, the average values of the vibration levels is above a predetermined threshold
    - interrupting (E9) the reception of vibration levels if the speeds are not simultaneously within the predetermined ranges.

2.  Process for monitoring the state of health of at least two vibration sensors of a bypass turbomachine comprising a low-pressure body and a high-pressure body, two front vibration sensors (C11, C12) located at the front of the turbomachine, two rear vibration sensors (C21, C22) located at the rear of the turbomachine, two sensors at the front of the turbomachine being configured to measure respectively the vibration levels of the low-pressure and high-pressure bodies at the front, two sensors at the rear of the turbomachine being configured to measure the vibration levels of the low-pressure and high-pressure bodies at the rear, respectively, the method being implemented in a turbomachine processing unit (20) in communication with each of the sensors and comprising the following steps:

    - receiving (E1) the low-pressure (NBP) and high-pressure (NHP) speeds of the turbomachine;
    during the receiving step, a step of verifying (E2) the low-pressure and high-pressure speeds; and when said speeds are simultaneously within predetermined ranges,
    - receiving (E3) the vibration levels (v1_BP, v1_HP, v2_BP, v2_HP, v3_HP, v3_BP) at the front and rear of the low-pressure and high-pressure bodies recorded by each sensor;
    - determining (E4) the average of the values of the vibration levels of the low-pressure and high-pressure bodies received over a predetermined reception period;
    - determining (E6) the state of health of said at least first and second vibration sensors based on a comparison of the average values of the vibration levels of the low-pressure and high-pressure bodies determined at predetermined thresholds, the state of health of a sensor of the vibration levels of the low-pressure body being considered poor if the average value of the vibration levels is below a predetermined threshold, and if for the other sensor the average value of the vibration levels is above a predetermined threshold; the state of health of a vibration level sensor of the high-pressure body is considered poor if the average vibration level is below a predetermined threshold and if the average vibration level for the other sensor is above a predetermined threshold;
    - interrupting (E9) the reception of the vibration levels if the speeds are not simultaneously within the predetermined ranges.

3.  Process according to one of the preceding claims, wherein the determined average (E4) is an average of the values of the received vibration levels of the low-pressure and high-pressure bodies determined for a number of received values corresponding to the predetermined reception time, the average being determinable instantaneously during reception.

4. Process according to one of the preceding claims, comprising a step of confirming (E7) the good or poor state of health of a sensor when the sensor exhibits the same health status three times consecutively.

5. Process according to one of the preceding claims, wherein a predetermined vibration threshold for the low-pressure body is between 0.1 and 0.2 cm/s, typically 0.16 cm/s.

6. Process according to one of the preceding claims, wherein a predetermined vibration threshold for the high-pressure body is between 0.05 and 0.15 cm/s, typically 0.10 cm/s.

7. Process according to one of the preceding claims, wherein the predetermined range for the low-pressure mode is between 10,500 rpm and 13,500 rpm and wherein the predetermined range for the high-pressure mode is between 14,500 rpm and 17,500 rpm.

8. Bypass turbomachine comprising a low-pressure body and a high-pressure body, the turbomachine comprising at least one front vibration sensor (C1, C1') located at the front of the turbomachine, a rear vibration sensor (C2, C2') located at the rear of the turbomachine, the turbomachine comprising a processing unit (20) configured to implement a method according to one of the preceding claims.

[Fig. 1]

[Fig. 2]

[Fig. 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2618899 A1
- FR 3064064 A1
- FR 2960319 A1